(19) Europäisches Patentamt
European Patent Office
Office européen des brevets

(11) **EP 4 796 653 A1**

(12) **EUROPEAN PATENT APPLICATION**
published in accordance with Art. 153(4) EPC

(43) Date of publication:
**26.08.2026 Bulletin 2026/35**

(21) Application number: **24901019.0**

(22) Date of filing: **03.12.2024**

(51) International Patent Classification (IPC):
***C21B 13/12*** *(2006.01)* ***C21B 13/00*** *(2006.01)*
***C21B 11/10*** *(2006.01)* ***C22B 1/00*** *(2006.01)*

(52) Cooperative Patent Classification (CPC):
**C21B 11/10; C21B 13/00; C21B 13/12; C22B 1/00;**
Y02P 10/20

(86) International application number:
**PCT/KR2024/019562**

(87) International publication number:
**WO 2025/121833 (12.06.2025 Gazette 2025/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.12.2023 KR 20230174461**

(71) Applicant: **POSCO Co., Ltd**
**Gyeongsangbuk-do 37859 (KR)**

(72) Inventors:
- **LEE, Sangbeom**
  **Pohang-si Gyeongsangbuk-do 37671 (KR)**
- **PARK, Jaehoon**
  **Gwangju 61706 (KR)**
- **SHIN, Dongyeop**
  **Pohang-si Gyeongsangbuk-do 37671 (KR)**
- **LEE, Sangdong**
  **Gwangyang-si Jeollanam-do 57747 (KR)**
- **KANG, Dongsu**
  **Pohang-si Gyeongsangbuk-do 37571 (KR)**
- **KEUM, Changhun**
  **Pohang-si Gyeongsangbuk-do 37902 (KR)**

(74) Representative: **Meissner Bolte Partnerschaft mbB**
**Patentanwälte Rechtsanwälte**
**Postfach 86 06 24**
**81633 München (DE)**

# (54) METHOD OF PRODUCING MOLTEN IRON FOR STAINLESS STEEL PRODUCTION

(57) The present disclosure relates to a method for manufacturing molten iron for manufacturing stainless steel, comprising: a step of forming a melt pool by charging and melting iron ore in a furnace body using an electric melting furnace comprising the furnace body, an electrode rod generating an arc, a raw material charging unit, a slag tapping port, and a metal tapping port; a step of charging a chrome ore and a nickel ore, a slag modifier, and a reducing agent from an upper part of the electric melting furnace along a central axis of the electrode rod into an arc generation region between a lower end portion of the electrode rod and the melt pool; and a step of reacting the charged chrome ore and nickel ore, slag modifier, and reducing agent with the melt pool to melt and reduce.

[Figure 1]

FORMING A MELT POOL BY CHARGING AND MELTING IRON ORE
↓
CHARGING RAW MATERIAL ORES (CHROME ORE AND NICKEL ORE), A SLAG MODIFIER, AND A REDUCING AGENT
↓
MELTING AND REDUCING THE CHARGED RAW MATERIAL ORES (CHROME ORE AND NICKEL ORE)



Processed by Luminess, 75001 PARIS (FR)

## Description

[Technical Field]

The present disclosure relates to a method of manufacturing molten iron for manufacturing stainless steel directly from iron ore, nickel ore, and chrome ore using an electric melting furnace.

[Background Art]

Manufacturing methods for stainless steel can be broadly classified into a manufacturing method using scrap and a manufacturing method using molten iron, depending on raw materials used. Compared to the scrap raw material manufacturing method, which highly depends on prices of scrap and raw materials, the manufacturing method using molten iron is considerably advantageous in terms of cost. Recently, major global stainless steel manufacturers also tend to use the manufacturing method using molten iron.

The manufacturing method for stainless steel using scrap generally melts scrap containing essential elements of stainless steel, such as chromium, in an electric furnace and then undergoes a decarburization process in a refining furnace. The manufacturing method using molten iron performs a decarburization process after performing a pretreatment for removing impurities such as silicon and phosphorus from the molten iron from a blast furnace. Since most steel mills manufacturing molten iron using blast furnaces for carbon steel also possess decarburizing converters, decarburization of stainless steel is also frequently performed using a converter.

The most difficult point in the stainless steel manufacturing method using molten iron is that a chromium source must be charged during the process because a chromium source for manufacturing stainless steel is not contained in general molten iron. Generally, a chromium source such as ferrochrome is often charged during a decarburization process in which impurities are removed because it contains impurities such as silicon and carbon. However, since the converter is a self-fusing furnace without an external heat source, securing a heat source must be performed in advance. Accordingly, methods such as manufacturing chromium molten iron through direct reduction of chrome ore and melting prior to charging the chromium source are being performed.

[Disclosure]

[Technical Problem]

An object of the present disclosure for solving the above-mentioned problems is to provide a method of manufacturing molten iron for manufacturing stainless steel, which can produce molten iron for manufacturing stainless steel directly from iron ore, chrome ore, and nickel ore using an electric melting furnace, thereby ensuring an excellent recovery rate of chromium and nickel, reducing production costs and energy consumption, and producing stainless steel more efficiently and in an environmentally friendly manner.

The technical problems to be achieved in the present disclosure are not limited to the technical problems mentioned above, and other technical problems not mentioned will be clearly understood by those of ordinary skill in the art from the following description.

[Technical Solution]

To achieve the above object, a method of manufacturing molten iron for manufacturing stainless steel according to an embodiment of the present disclosure comprises: a step of forming a melt pool by charging and melting iron ore in a furnace body using an electric melting furnace comprising the furnace body, an electrode rod generating an arc, a raw material charging unit, a slag tapping port, and a metal tapping port; a step of charging a chrome ore and a nickel ore, a slag modifier, and a reducing agent from an upper part of the electric melting furnace along a central axis of the electrode rod into an arc generation region between a lower end portion of the electrode rod and the melt pool; and a step of reacting the charged chrome ore and nickel ore, the slag modifier, and the reducing agent with the melt pool to melt and reduce.

Further, according to an embodiment of the present disclosure, the raw material ores are charged according to a relationship of Formula (1):

$$\text{input amount of nickel ore} \times 0.3 \leq \text{input amount of chrome ore} \leq \text{input amount of nickel ore} \times 0.45 \qquad \text{Formula (1):}$$

Further, according to an embodiment of the present disclosure, the method comprises drying raw materials and pre-reducing the dried raw materials before charging the raw material ores into the inside of the electric melting furnace.

Further, according to an embodiment of the present disclosure, the pre-reducing is performed until a reduction rate of raw material ore powder reaches 20 to 80%.

Further, according to an embodiment of the present disclosure, the slag modifier comprises any one of quicklime (CaO), limestone ($CaCO_3$), or a mixture thereof.

Further, according to an embodiment of the present disclosure, the slag modifier is charged such that a slag basicity (a mass ratio of CaO to $SiO_2$) becomes 1.3 to 1.5.

Further, according to an embodiment of the present disclosure, the reducing agent comprises any one of coke, coal, ferrosilicon (FeSi), or a mixture thereof.

Further, according to an embodiment of the present disclosure, the reducing agent is charged according to a relationship of Formula (2):

input amount of reducing agent ≥ (input amount of chrome ore + input amount of nickel ore) × 0.25 / carbon content in reducing agent  Formula (2):

Further, according to an embodiment of the present disclosure, the method comprises tapping the molten iron for manufacturing stainless steel at 1.5 hours or more and 3 hours or less after charging the raw material ores.

Further, according to an embodiment of the present disclosure, the molten iron for manufacturing stainless steel comprises, in percent by weight (wt%), 15% or more of chromium (Cr), 7% or more of nickel (Ni), and 1.5% or more of carbon (C).

Further, according to an embodiment of the present disclosure, the electric melting furnace comprises: the furnace body; the electrode rod positioned to be inserted into the inside from a center of an upper part of the furnace body and generating the arc; the raw material charging unit disposed to be spaced apart from the electrode rod and charging the raw material ores into the furnace body; the slag tapping port discharging reduced slag from the furnace body; and the metal tapping port discharging the molten iron for manufacturing stainless steel from the furnace body.

[Advantageous Effects]

According to an embodiment of the present disclosure, by directly producing molten iron for manufacturing stainless steel from iron ore, chrome ore, and nickel ore using an electric melting furnace, the recovery rate of chromium and nickel is excellent, production costs and energy consumption can be reduced, and molten iron for manufacturing stainless steel, which can produce stainless steel more efficiently and in an environmentally friendly manner, can be easily manufactured.

The effects obtainable from the present disclosure are not limited to the effects mentioned above, and other effects not mentioned will be clearly understood by those of ordinary skill in the art from the following description.

[Description of Drawings]

FIG. 1 is a block diagram of a method of manufacturing molten iron for manufacturing stainless steel according to an embodiment of the present disclosure.

FIG. 2 is a diagram illustrating a control range of slag basicity according to an embodiment of the present disclosure.

FIG. 3 is a schematic diagram of an electric melting furnace for manufacturing molten iron for manufacturing stainless steel according to an embodiment of the present disclosure.

FIG. 4 is a schematic diagram of a circular electric melting furnace having three electrode rods for manufacturing molten iron for manufacturing stainless steel according to an embodiment of the present disclosure.

FIG. 5 is a schematic diagram of a rectangular electric melting furnace having six electrode rods for manufacturing molten iron for manufacturing stainless steel according to an embodiment of the present disclosure.

[Modes of the Invention]

Hereinafter, embodiments of the present disclosure will be described in detail with reference to the accompanying drawings. The following embodiments are presented to sufficiently convey the spirit of the present disclosure to those of ordinary skill in the art to which the present disclosure pertains. The present disclosure is not limited to the embodiments presented herein and may be embodied in other forms. In the drawings, parts unrelated to the description are omitted to clarify the present disclosure, and the size of components may be somewhat exaggerated to aid understanding.

Further, when a certain part "comprises" a certain component, this means that the part may further comprise

other components, not excluding other components, unless otherwise specifically stated.

Singular expressions include plural expressions unless the context clearly dictates otherwise.

The present disclosure relates to a method of manufacturing molten iron for manufacturing stainless steel directly from iron ore, nickel ore, and chrome ore using an electric melting furnace. Further, the present disclosure relates to a method of manufacturing molten iron for manufacturing stainless steel containing iron, nickel, and chromium by melting and reducing raw material ores using an electric melting furnace, which is a method differentiated from a method of melting scrap in a conventional electric furnace. According to the present disclosure, by using low-cost chrome ore and nickel ore as raw materials, an intermediate step of processing the ore into ferroalloys is not required, thereby reducing production costs and energy consumption of stainless steel and enabling more efficient and environmentally friendly production of stainless steel.

The method of manufacturing molten iron for manufacturing stainless steel of the present disclosure comprises: forming a melt pool by charging and melting iron ore in a furnace body using an electric melting furnace comprising the furnace body, an electrode rod generating an arc, a raw material charging unit, a slag tapping port, and a metal tapping port; charging a chrome ore and a nickel ore, a slag modifier, and a reducing agent from an upper part of the electric melting furnace along a central axis of the electrode rod into an arc generation region between a lower end portion of the electrode rod and the melt pool; and melting and reducing by reacting the charged chrome ore and nickel ore, the slag modifier, and the reducing agent with the melt pool.

Hereinafter, the method of manufacturing molten iron for manufacturing stainless steel of the present disclosure will be described in detail.

First, iron ore is charged into the furnace body and power is applied to melt the iron ore, thereby forming a melt pool.

In a general electric melting furnace, it takes a long time to increase the temperature so that the furnace body is operated. Accordingly, to increase the temperature for the operation of the furnace body, iron ore having excellent solubility is first charged into the furnace body before charging raw material ores and power is applied, so that the iron ore is melted by arc heat generated from an electrode rod to form a melt pool. At this time, the iron ore is charged only in the first step for increasing the temperature during the entire operation time of the furnace body, and the iron ore is charged in an amount that can sufficiently increase the temperature of the furnace body and then a constant temperature is maintained. Preferably, the iron ore is charged at about 70 to 80% of the total capacity of the furnace body to maintain the internal temperature of the furnace body at 1500°C or more, and more preferably, the iron ore is charged at 80% of the total capacity of the furnace body to maintain the internal temperature of the furnace body at 2000°C to 3000°C.

Further, for increasing the temperature for the operation of the furnace body, the furnace body may be pre-heated using a heat source material having excellent solubility before charging the iron ore. For example, scrap or the like, which is easily melted by heat, may be used as the heat source material. At this time, the charged scrap is used only as a heat source material for heating the furnace body and is used for a purpose different from scrap charged for manufacturing general molten stainless steel iron.

That is, before charging raw material ores, a heat source material having excellent solubility such as scrap is charged and melted for the operation of the furnace body to heat the furnace body, and then iron ore is charged to form a melt pool so that the furnace body maintains a constant temperature, whereby preparation for the operation of the furnace body can be pre-performed.

When a heat source material or iron ore is charged for heating the furnace body and power is supplied, an arc is generated from an electrode rod, and the heat source material or iron ore is melted by this arc heat to form a melt pool. At this time, an arc generation region where an arc is generated is formed between the electrode rod and the melt pool, and the arc generation region has a temperature of 2000°C to 3000°C.

After forming the melt pool in the furnace body, chrome ore and nickel ore, which are raw material ores, are charged into the furnace body. At this time, the raw material ores are preferably charged around the electrode rod so that they can reach the lower end portion of the electrode rod along the central axis of the electrode rod.

That is, by disposing the raw material charging unit in close proximity to the electrode rod, the charged raw material ores move along the central axis of the electrode rod and are supplied to the lower end portion of the electrode rod, that is, the arc generation region.

Since the arc generated from the electrode rod is in a very high temperature state of about 2000°C to 3000°C, even chrome ore or the like, which has a high melting point and is difficult to reduce, can be easily dissolved in slag.

Chrome ore has chromite (Mg,Fe)O·(Cr,Al,Fe)2O3 having a spinel structure as a main component, has strong bonding force due to the nature of the spinel structure, and has a high melting point. Accordingly, in the past, it was considered impossible to melt and reduce chrome ore using an electric furnace, and thus chrome ore was not used for manufacturing chromium-containing steel in an electric furnace.

However, in the present disclosure, the temperature of the arc generation region between the electrode rod and the melt pool is as high as 2000°C to 3000°C due to the arc generated from the electrode rod of the electric melting furnace, and if chrome ore and nickel ore, which are raw material ores, are charged into the arc generation region, the raw material

ores can be effectively melted and reduced. In particular, in the present disclosure, by charging the raw material ores into the arc generation region at a temperature of 2000°C to 3000°C, a chromite structure, which is a main component of chrome ore, is made into molten oxides such as MgO, FeO, Al2O3, and Cr2O3 through a slag modifier that imparts slag fluidity, and then the molten oxides can be reduced by a reducing agent. That is, according to the present disclosure, chrome ore, which was considered impossible to melt and reduce in a conventional electric furnace, can be efficiently melted and reduced to manufacture molten iron for manufacturing stainless steel containing chromium and nickel.

The chrome ore and the nickel ore, which are raw material ores, are preferably charged according to a relationship of Formula (1):

$$\text{input amount of nickel ore} \times 0.3 \leq \text{input amount of chrome ore} \leq \text{input amount of nickel ore} \times 0.45 \quad \text{Formula (1):}$$

Generally, for manufacturing Fe-Cr-Ni based stainless steel, 15% or more of chromium (Cr), 7% or more of nickel (Ni), and 1.5% or more of carbon (C) should be contained in molten iron. To satisfy such a composition, in the present disclosure, the raw material ores, chrome ore and nickel ore, are preferably charged according to the relationship of Formula (1).

Further, the chrome ore, which is the raw material ore, comprises, in wt% based on a dry ore component, 40% of $Cr_2O_3$, 12% of FeO, 8% of MgO, and preferably comprises a balance of CaO, MgO, $Al_2O_3$, and $SiO_2$. Further, although nickel ore varies depending on the type of ore, it preferably comprises, in wt% based on a dry ore component, 3 to 4% of Ni and 40 to 60% of Fe.

Further, the raw material ores may further comprise drying raw materials and pre-reducing the dried raw materials before being charged into the electric melting furnace.

The drying of the raw materials may be performed using a rotary hearth furnace (RHF), a rotary kiln (RK), or the like, and the pre-reducing may be controlled so that a reduction rate of the raw material ore becomes 20 to 80%. When the reduction rate of the raw material ore during pre-reduction is less than 20%, an effect of improving a melting speed in the furnace body due to pre-reduction cannot be seen, and when it exceeds 80%, an effect of improving the melting speed in the furnace body and a raw material recovery rate relative to the reduction rate may be insignificant.

Further, when charging the chrome ore and the nickel ore, which are raw material ores, into the furnace body, a slag modifier and a reducing agent may be charged together.

The slag modifier serves to impart fluidity to slag, and quicklime (CaO), limestone ($CaCO_3$), or the like may be used. At this time, the basicity of slag (a mass ratio of CaO to $SiO_2$) needs to be controlled to a level where viscosity is low and $Cr_2O_3$ solubility is low in terms of slag physical properties, thereby facilitating reduction.

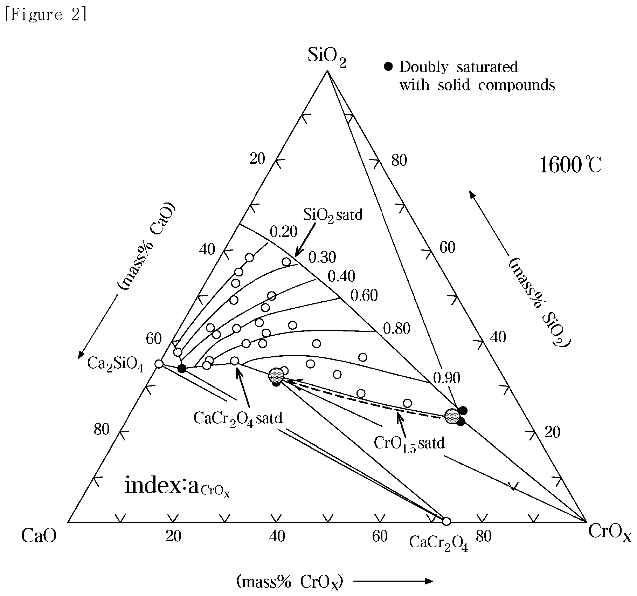

FIG. 2 shows a control range of slag basicity. As shown in FIG. 2, when the basicity of slag increases, the solubility of $Cr_2O_3$ decreases. However, when the slag basicity increases excessively, $CaCr_2O_4$ is precipitated, so that viscosity increases and reduction becomes difficult. Considering this, the slag modifier is preferably charged such that the basicity of slag (a mass ratio of CaO to $SiO_2$) is controlled to be between 1.3 and 1.5, and more preferably controlled to be 1.4.

Further, if ferrosilicon (FeSi) or silicon carbide (SiC) is used as the reducing agent, slag becomes low-basicity, and as lime input is increased to control slag basicity, a problem of increasing slag volume may occur. Therefore, in the present disclosure, it is preferable to use a carbon-based reducing agent such as coke or coal as the reducing agent. However, when there is a problem in furnace condition due to poor reduction, a reducing agent such as ferrosilicon may be used.

The reducing agent is preferably charged according to a relationship of Formula (2):

$$\text{input amount of reducing agent} \geq (\text{input amount of chrome ore} + \text{input amount of nickel ore}) \times 0.25 / \text{carbon content in reducing agent} \quad \text{Formula (2):}$$

The larger the input amount of the reducing agent, the better, and for the recovery rate of chrome ore and nickel ore, it is preferably charged more than the relationship presented in Formula (2).

As described above, when chrome ore and nickel ore, which are raw material ores, are supplied to an arc generation region or a high-temperature region near the arc generation region between the lower end portion of the electrode rod and the melt pool in the furnace body, and a slag modifier for imparting fluidity to slag is added to the furnace body together with $SiO_2$, $Al_2O_3$, etc. contained in the chrome ore and nickel ore, the chrome ore and nickel ore are melted in the slag by arc heat generated between the electrode rod and the melt pool, and the melted chrome ore and nickel ore are reduced by the reducing agent and slag modifier added to the furnace body.

At this time, slag containing the chrome ore and nickel ore should be melted by contact-reacting the melt pool, slag, reducing agent, chrome ore, and nickel ore near the electrode rod instead of collecting at an outer edge of the furnace body, and should be reduced by the reducing agent in a short time. Since the concentrations of chromium and nickel in the melt pool increase according to the retention time in the furnace body, it is preferable to tap when chromium and nickel

reach appropriate concentrations. Considering this, the tapping is preferably performed at least 1.5 hours after charging raw materials, and preferably between 1.5 hours and 3 hours, for recovery of chromium and nickel.

The molten iron for manufacturing stainless steel of the present disclosure manufactured as described above may comprise, in wt%, 15% or more of chromium (Cr), 7% or more of nickel (Ni), and 1.5% or more of carbon (C). Generally, components of stainless steel comprise, in wt%, 18 to 20% of Cr and 8 to 10% of Ni. Therefore, if only one component of Cr and Ni is high, a situation occurs in which ferrochrome or ferronickel must be excessively charged to match components in a decarburization process, which is a process following the electric melting furnace, and difficulties in operation may occur due to a cooling effect of such ferroalloys. Considering this, Cr and Ni should be simultaneously contained at 15% and 7% or more, respectively, and preferably do not exceed 20% and 10%, respectively. Further, in the case of C, since it acts as a heat source in the decarburization process, it should be contained at 1.5% or more, and if it exceeds 5%, a time required for decarburization increases and a molten steel temperature excessively increases, so that a vicious cycle of charging a coolant again may occur.

Further, the molten iron for manufacturing stainless steel can be manufactured into Fe-Cr-Ni based stainless steel through a subsequent decarburization process, a secondary refining process, a continuous casting process, and the like.

Hereinafter, a method of producing molten iron for stainless steel production according to an embodiment of the present disclosure will be described with reference to the drawings.

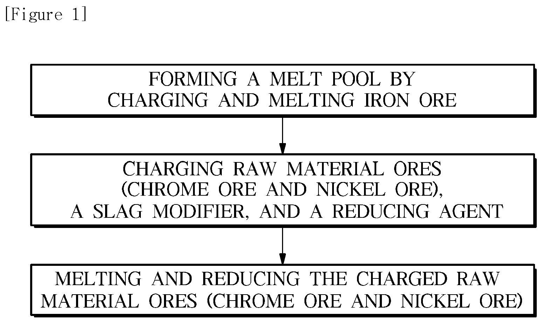

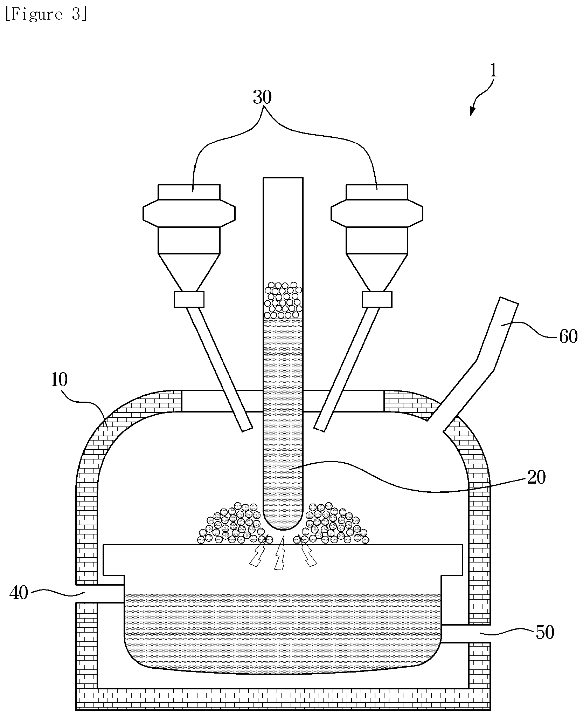

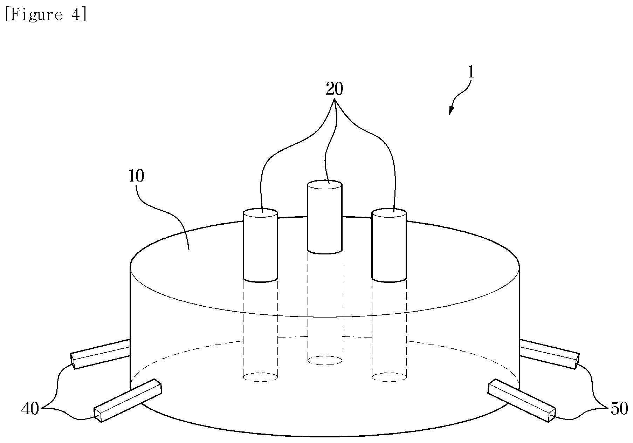

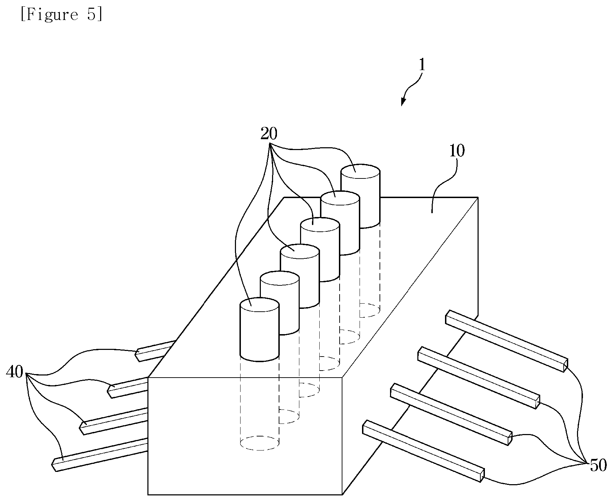

FIG. 1 is a block diagram of a method of producing molten iron for stainless steel production according to an embodiment of the present disclosure, FIG. 3 is a schematic diagram of an electric melting furnace for producing molten iron for stainless steel production according to an embodiment of the present disclosure, FIG. 4 is a schematic diagram of a circular electric melting furnace having three electrode rods for producing molten iron for stainless steel production according to an embodiment of the present disclosure, and FIG. 5 is a schematic diagram of a rectangular electric melting furnace having six electrode rods for producing molten iron for stainless steel production according to an embodiment of the present disclosure.

Referring to FIG. 1, molten iron for stainless steel production according to an embodiment of the present disclosure can be produced by charging and melting iron ore in a furnace body of an electric melting furnace to form a melt pool, charging chrome ore and nickel ore, a slag modifier, and a reducing agent into the furnace body, and then reacting the charged chrome ore and nickel ore, the slag modifier, and the reducing agent with the melt pool to melt and reduce them.

Referring to FIGS. 3 to 5, an electric melting furnace (1) for manufacturing molten iron for manufacturing stainless steel according to an embodiment of the present disclosure comprises: a furnace body (10); an electrode rod (20) positioned at a center of the furnace body (10) and generating an arc; a raw material charging unit (30) disposed to be spaced apart from the electrode rod (20) and charging raw material ores into the furnace body (10); a slag tapping port (40) discharging reduced slag from the furnace body (10); and a metal tapping port (50) discharging molten iron for manufacturing stainless steel from the furnace body (10).

The furnace body (10) may have a circular (see FIG. 4) or rectangular (see FIG. 5) structure, may be manufactured of a heat-resistant material to withstand high-temperature and corrosive environments, and an inside of the furnace body (10) may be coated with a refractory material to prevent reaction with raw material ores. Further, a gas discharge unit (60) for discharging exhaust gas may be provided on one side of the furnace body (10).

The electrode rod (20) is positioned to be inserted into the inside of the furnace body (10) from a center of an upper part of the electric melting furnace (1) and is connected to a power supply. The electrode rod (20) is made of a conductive material such as carbon (C) and generates arc heat when power is applied and electricity passes through. The electrode rod (20) may comprise a plurality of electrodes, such as three or six, as needed. The power supply supplies power to the electrode rod (20) to generate arc heat, and melts and reduces chrome ore and nickel ore, which are raw material ores, by the generated arc heat. At this time, the power supply may use any electrical source such as a generator or a power grid.

When the electric melting furnace (1) is operated, power is applied to the electrode rod (20) inserted into the furnace body (10), and as electricity passes through the electrode rod (20), arc heat is generated. By the arc heat thus generated, chrome ore and nickel ore, which are raw material ores charged into the furnace body (10), are melted and reacted with a carbon-based reducing agent, whereby molten iron for stainless steel production containing C and saturated Fe, Ni, and Cr can be produced. After the reaction is completed, slag is discharged through the slag tapping port (40), and the molten iron for stainless steel production is discharged through the metal tapping port (50) and can thereafter be produced into stainless steel through steelmaking processes such as decarburization, secondary refining, and continuous casting.

Hereinafter, the present disclosure will be described in more detail through examples. However, the description of these examples is only for illustrating the practice of the present disclosure, and the present disclosure is not limited by the description of these examples. This is because the scope of rights of the present disclosure is determined by the matters described in the claims and matters reasonably inferred therefrom.

Example

The following example was performed using a circular electric melting furnace as shown in FIG. 4, which has three electrode rods and can hold 10 tons of molten iron.

Two days before charging chrome ore and nickel ore, which are raw material ores, into the electric melting furnace, 2 tons of scrap were spread on a bottom of the furnace body as a heat source material, and power was supplied to melt the scrap by arc heat of the electrode rods. Then, to increase the temperature for operation of the furnace body, direct reduction iron (DRI) produced by directly reducing iron ore and coke as a reducing agent were mixed and charged at 1 ton per hour and melted. Iron ore was charged to form a total of 8 tons of melt pool in the furnace body, and the temperature was maintained until it became 1500°C or more.

Subsequently, 350 kg of chrome ore, 1 ton of nickel ore, 700 g of quicklime (CaO) as a slag modifier, and 350 kg of coke as a reducing agent were prepared, and then slowly charged from an upper part of the furnace body along a central axis of the electrode rod through the raw material charging unit, and the charged chrome ore, nickel ore, slag modifier, and reducing agent were brought into contact with the melt pool to be melted and reduced, thereby producing molten iron for stainless steel production. Then, the molten iron in the furnace body was tapped every 3 hours, and concentrations of chromium and nickel contained in the molten iron for stainless steel production were slowly increased while again charging chrome ore, nickel ore, slag modifier, and reducing agent.

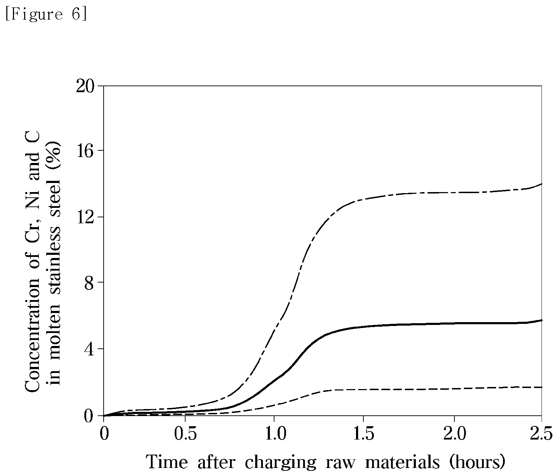

The concentrations of Cr, Ni, and C in the molten iron for stainless steel production according to the charging time of chrome ore and nickel ore, which are raw material ores, during the production of the molten iron for stainless steel production were measured and are shown in FIG. 6.

As shown in FIG. 6, it was confirmed that the molten iron for manufacturing stainless steel manufactured according to the present disclosure contains Cr, Ni, and C in the molten iron to be suitable for use in manufacturing stainless steel only when it is tapped at least 1.5 hours after charging raw materials.

Further, after operating the electric melting furnace for 24 hours, components of the tapped molten iron for manufacturing stainless steel were analyzed, and the results are shown in Table 1.

[Table 1]

| Classification | Chromium (Cr) Concentration | Nickel (Ni) Concentration | Carbon (C) Concentration |
|---|---|---|---|
| Components of molten iron for manufacturing stainless steel | 15.4% | 5.5% | 2.1% |

As shown in Table 1, it was confirmed that the molten iron for manufacturing stainless steel manufactured according to the present disclosure contains Cr, Ni, and C at levels suitable for manufacturing stainless steel. From these results, it was confirmed that stainless steel can be produced using the molten iron for stainless steel production produced according to the present disclosure.

Although the embodiments of the disclosed disclosure have been illustrated and described above, the disclosed disclosure is not limited to the specific embodiments described above, and various modifications may be made by those of ordinary skill in the art to which the disclosed disclosure pertains without departing from the scope of the claims.

[Description of Reference Numerals]

1: electric melting furnace 10: furnace body
20: electrode rod 30: raw material charging unit
40: slag tapping port 50: metal tapping port
60: gas discharge unit

**Claims**

**1.** A method of manufacturing molten iron for manufacturing stainless steel, comprising:

a step of forming a melt pool by charging and melting iron ore into a furnace body using an electric melting furnace comprising the furnace body, an electrode rod generating an arc, a raw material charging unit, a slag tapping port, and a metal tapping port;

a step of charging a chrome ore and a nickel ore, a slag modifier, and a reducing agent from an upper part of the

electric melting furnace along a central axis of the electrode rod into an arc generation region between a lower end portion of the electrode rod and the melt pool; and
a step of reacting the charged chrome ore and nickel ore, the slag modifier, and the reducing agent with the melt pool to melt and reduce.

**2.** The method of claim 1,
wherein the chrome ore and the nickel ore are charged according to a relationship of Formula (1):

input amount of nickel ore $\times$ 0.3 $\leq$ input amount of chrome ore $\leq$ input amount of nickel ore $\times$ 0.45. Formula (1):

**3.** The method of claim 1,
wherein the method comprises drying raw materials and pre-reducing the dried raw materials before charging the chrome ore and the nickel ore into the inside of the electric melting furnace.

**4.** The method of claim 3,
wherein the pre-reducing is performed until a reduction rate of raw material ore powder reaches 20 to 80%.

**5.** The method of claim 1,
wherein the slag modifier comprises any one of quicklime (CaO), limestone ($CaCO_3$), or a mixture thereof.

**6.** The method of claim 1,
wherein the slag modifier is charged such that a slag basicity (a mass ratio of CaO to $SiO_2$) becomes 1.3 to 1.5.

**7.** The method of claim 1,
wherein the reducing agent comprises any one of coke, coal, ferrosilicon (FeSi), or a mixture thereof.

**8.** The method of claim 1,
wherein the reducing agent is charged according to a relationship of a following Formula (2):

Input amount of reducing agent $\geq$ (Input amount of Cr ore + Input amount of Ni ore) $\times$ 0.25 / Carbon content in reducing agent. Formula (2):

**9.** The method of claim 1,
comprising tapping the molten iron for stainless steel production at 1.5 hours or more to 3 hours or less after charging raw material ores.

**10.** The method of claim 1,
wherein the molten iron for stainless steel production comprises, in percent by weight (wt%), 15% or more of chromium (Cr), 7% or more of nickel (Ni), and 1.5% or more of carbon (C).

**11.** The method of claim 1,
wherein the electric melting furnace comprises: the furnace body; the electrode rod positioned to be inserted from a center of an upper part of the furnace body into an inside thereof and generating the arc; the raw material charging unit disposed to be spaced apart from the electrode rod and charging the raw material ores into the furnace body; the slag tapping port discharging reduced slag from the furnace body; and the metal tapping port discharging the molten iron for stainless steel production from the furnace body.

[Figure 1]

FORMING A MELT POOL BY
CHARGING AND MELTING IRON ORE
CHARGING RAW MATERIAL ORES
(CHROME ORE AND NICKEL ORE),
A SLAG MODIFIER, AND A REDUCING AGENT
MELTING AND REDUCING THE CHARGED RAW
MATERIAL ORES (CHROME ORE AND NICKEL ORE)

[Figure 2]

SiO2
● Doubly saturated with solid compounds
1600℃
(mass% CaO)
(mass% SiO2)
SiO2 satd
0.20
0.30
0.40
0.60
0.80
0.90
Ca2SiO4
CaCr2O4 satd
CrO1.5 satd
index:aCrOx
CaO
CaCr2O4
CrOX
(mass% CrOX)
20
40
60
80

[Figure 3]

1
30
60
10
20
40
50

[Figure 4]

1
20
10
40
50

[Figure 5]

1
20
10
40
50

[Figure 6]

Concentration of Cr, Ni and C in molten stainless steel (%)
20
16
12
8
4
0
0
0.5
1.0
1.5
2.0
2.5
Time after charging raw materials (hours)

## INTERNATIONAL SEARCH REPORT

International application No.
**PCT/KR2024/019562**

**A. CLASSIFICATION OF SUBJECT MATTER**

**C21B 13/12**(2006.01)i; **C21B 13/00**(2006.01)i; **C21B 11/10**(2006.01)i; **C22B 1/00**(2006.01)i

According to International Patent Classification (IPC) or to both national classification and IPC

**B. FIELDS SEARCHED**

Minimum documentation searched (classification system followed by classification symbols)

C21B 13/12(2006.01); C21B 11/00(2006.01); C21B 11/10(2006.01); C21C 5/00(2006.01); C21C 5/28(2006.01); C21C 7/00(2006.01); C22C 33/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스테인리스강(stainless steel), 아크(arc), 철광석(iron ore), 크롬 광석(chrome ore), 니켈 광석(nickel ore), 용융 풀(melt pool)

**C. DOCUMENTS CONSIDERED TO BE RELEVANT**

| Category* | Citation of document, with indication, where appropriate, of the relevant passages | Relevant to claim No. |
|---|---|---|
| Y | KR 10-1418125 B1 (THE BOC GROUP, INC.) 10 July 2014 (2014-07-10)<br>See paragraphs [0023]-[0030], claims 1 and 12-17 and figure 1. | 1-11 |
| Y | KR 10-2000-0062364 A (ALABAMA POWER COMPANY) 25 October 2000 (2000-10-25)<br>See paragraphs [0055]-[0056], claims 24 and 35 and figure 3. | 1-11 |
| Y | KR 10-1174705 B1 (SMS SIEMAG AKTIENGESELLSCHAFT) 16 August 2012 (2012-08-16)<br>See paragraphs [0017]-[0024], claim 1 and figure 1. | 3-4 |
| A | JP 09-227918 A (NIPPON STEEL CORP.) 02 September 1997 (1997-09-02)<br>See paragraphs [0006]-[0010] and figure 1. | 1-11 |
| A | KR 10-1990-0002572 B1 (NIPPON KOKAN CO.) 20 April 1990 (1990-04-20)<br>See claims 1 and 4-5 and figures 1-3. | 1-11 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 March 2025** | **18 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/019562**

| Patent document cited in search report | Publication date (day/month/year) | Patent family member(s) | Publication date (day/month/year) |
|---|---|---|---|
| KR 10-1418125 B1 | 10 July 2014 | CN 101194031 A | 04 June 2008 |
| | | EP 1888793 A1 | 20 February 2008 |
| | | EP 1888793 B1 | 10 May 2017 |
| | | ES 2632501 T3 | 13 September 2017 |
| | | KR 10-2008-0015100 A | 18 February 2008 |
| | | US 2009-0173187 A1 | 09 July 2009 |
| | | WO 2006-131764 A1 | 14 December 2006 |
| | | ZA 200708932 B | 29 October 2008 |
| KR 10-2000-0062364 A | 25 October 2000 | AT E221133 T1 | 15 August 2002 |
| | | AU 5748996 A | 21 November 1996 |
| | | AU 5808698 A | 31 July 1998 |
| | | BR 9608130 A | 10 August 1999 |
| | | BR 9714651 A | 13 June 2000 |
| | | CA 2219763 A1 | 07 November 1996 |
| | | CA 2219763 C | 30 October 2001 |
| | | CA 2276151 A1 | 09 July 1998 |
| | | CN 1050634 C | 22 March 2000 |
| | | CN 1073629 C | 24 October 2001 |
| | | CN 1186521 A | 01 July 1998 |
| | | CN 1251618 A | 26 April 2000 |
| | | DE 69622587 T2 | 27 March 2003 |
| | | EP 0871781 A1 | 21 October 1998 |
| | | EP 0871781 B1 | 24 July 2002 |
| | | EP 0963449 A1 | 15 December 1999 |
| | | JP 11-508962 A | 03 August 1999 |
| | | JP 2001-508860 A | 03 July 2001 |
| | | JP 3699123 B2 | 28 September 2005 |
| | | KR 10-0270635 B1 | 01 December 2000 |
| | | KR 10-1999-0008325 A | 25 January 1999 |
| | | MX 9708345 A | 30 June 1998 |
| | | RU 2144571 C1 | 20 January 2000 |
| | | US 5588982 A | 31 December 1996 |
| | | US 5882374 A | 16 March 1999 |
| | | US 5912916 A | 15 June 1999 |
| | | WO 96-34988 A1 | 07 November 1996 |
| | | WO 98-29572 A1 | 09 July 1998 |
| KR 10-1174705 B1 | 16 August 2012 | AU 2008-315932 A1 | 30 April 2009 |
| | | AU 2008-315932 B2 | 14 April 2011 |
| | | BR PI0818714 A2 | 25 August 2015 |
| | | BR PI0818714 A8 | 03 May 2016 |
| | | BR PI0818714 B1 | 28 March 2017 |
| | | CN 101835911 A | 15 September 2010 |
| | | DE 102007050478 A1 | 30 April 2009 |
| | | EP 2207905 A1 | 21 July 2010 |
| | | EP 2207905 B1 | 14 August 2013 |
| | | ES 2426455 T3 | 23 October 2013 |
| | | JP 2011-500965 A | 06 January 2011 |
| | | JP 5583585 B2 | 03 September 2014 |
| | | KR 10-2010-0056570 A | 27 May 2010 |
| | | TW 200920852 A | 16 May 2009 |

Form PCT/ISA/210 (patent family annex) (July 2022)

**INTERNATIONAL SEARCH REPORT**
**Information on patent family members**

International application No.
**PCT/KR2024/019562**

| Patent document cited in search report | Publication date (day/month/year) | Patent family member(s) | Publication date (day/month/year) |
|---|---|---|---|
| | | TW I392742 B | 11 April 2013 |
| | | US 2010-0288078 A1 | 18 November 2010 |
| | | US 8133296 B2 | 13 March 2012 |
| | | WO 2009-053044 A1 | 30 April 2009 |
| | | ZA 201002190 B | 24 November 2010 |
| JP 09-227918 A | 02 September 1997 | JP 09-227918 A | 02 September 1997 |
| KR 10-1990-0002572 B1 | 20 April 1990 | CA 1258178 A | 08 August 1989 |
| | | EP 0179336 A1 | 30 April 1986 |
| | | EP 0179336 B1 | 29 March 1989 |
| | | JP 61-091309 A | 09 May 1986 |
| | | JP 61-091319 A | 09 May 1986 |
| | | KR 10-1986-0003353 A | 23 May 1986 |
| | | US 4652306 A | 24 March 1987 |

Form PCT/ISA/210 (patent family annex) (July 2022)